# EUROPEAN PATENT APPLICATION

(11) **EP 1 785 656 A2**
(43) Date of publication of application: **16.05.2007**
(21) Application number: 06425766.0
(22) Date of filing: 10.11.2006
(51) Int. Cl.: F16L 15/08, F16L 15/04

(54) **A fluid-tight connection structure**

(30) Priority: 11.11.2005 IT SM20050025
(71) Applicant: Tapel di Mastromatteo Ciro & C. S.a.s, 36043 Camisano Vicentino (IT)
(72) Inventor: Mastromatteo, Ciro, 36043 Camisano Vicentino (Vicenza) (IT)
(74) Representative: Mannucci, Michele

(57) **Abstract**

A fluid-tight connection structure for connection of a first hydraulic component (P) and a second hydraulic component, at least the first of which has an internally threaded hollow seat (S). The structure comprises at least one tubular body (2), which can be coupled to both of the hydraulic components with interposition of at least one annular gasket (3) made of elastomeric material. The tubular body (2) has an externally threaded end portion, which can be screwed into the internally threaded hollow seat (S) of the first hydraulic component, and is joined to an axial appendage, which has an outer surface (6) that is substantially conical and divergent, and can be inserted into the internally threaded hollow seat (S) of the first component. The annular gasket (3) is provided with axial-contrast means and is mounted peripherally with respect to the axial appendage so as to undergo a radial expansion against the internal wall of the internally threaded hollow seat (S) upon screwing into the latter of the externally threaded end portion of said tubular body (2).

## Description

### Field of application

The present invention is generally applicable to the field of hydraulic pipe fittings, and the subject thereof is in particular a fluid-tight connection structure.

The connection structure according to the invention is indicated for fitting a first hydraulic component, such as a hydraulic pipe or the like, having an internally threaded hollow seat, to a second hydraulic component, such as a plug, a flow valve, a flow-regulating valve, an air valve, or the like.

### State of the art

It is known that the pipes in which fluids flow, and in particular radiators, are provided with connector devices for connection of first hydraulic components to second hydraulic components, such as plugs, valves or the like.

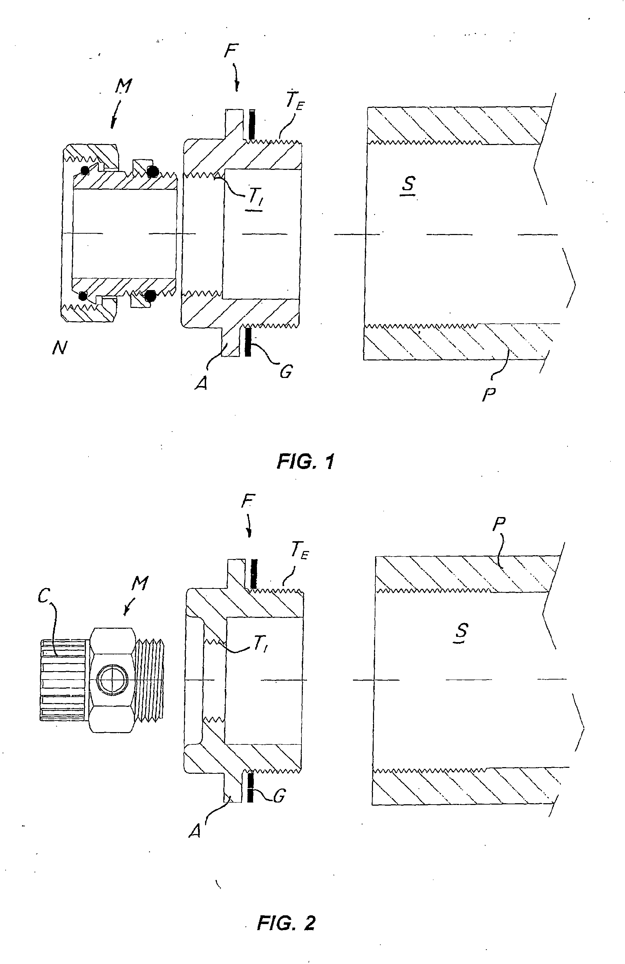

Figures **1** and **2** illustrate two examples of said known connector devices, which are formed by a tubular body **F,** designed to be coupled to the internally threaded hollow seat **S** of the first hydraulic component, such as the pipe **P,** and a connection element **M,** carrying the second hydraulic component, such as, for example, the plug element **C** in Figure 2 or the connector ring nut **N** to a valve in Figure 1.

The tubular body **F** has a first, externally threaded, portion **T_{E},** which is inserted into the counterthreaded end of the first hydraulic component, and a second, internally threaded, portion **T_{I},** screwed in which is the element **M.**

The body **F** comprises also a radial appendage **A** for compressing axially a gasket **G** against the wall of the pipe, not illustrated in the figure.

A generally recognized drawback of said known solutions is that the body **F** presents an absolutely insufficient fluid tightness, with undesirable leakages of fluid and consequent increase in the running and maintenance costs.

In addition, since said connections are made of steel, in contact with acidic waters they tend to rust, with consequent total or partial corrosion of the gasket and further undesirable leakages of fluid.

In addition, said known connections are extremely inconvenient to assemble and disassemble, since the counterthread of the portion **T_{I}** for joining between the elements **M** and **F** tends to deteriorate and rust, so that it is difficult to take said elements apart.

### Presentation of the invention

The object of the present invention is to overcome the drawbacks highlighted above, by providing a connection structure that presents characteristics of marked efficiency and of relatively low cost.

A particular object is to provide a connection structure that presents an excellent hydraulic and mechanical tightness.

A further object is to provide a connection structure with good resistance to rust.

Yet a further object is to provide a connection structure that will enable a convenient connection/disconnection of the elements forming part of the ensemble.

The above objects, as well as other objects that will emerge more clearly hereinafter, are achieved by a fluid-tight connection structure according to Claim 1, for connection of a first hydraulic component and a second hydraulic component, at least the first of which has an internally threaded hollow seat, comprising at least one tubular body, which can be fitted to both of the hydraulic components with interposition of at least one annular gasket made of elastomeric material.

According to the invention, the tubular body has an externally threaded end portion that can be screwed into the internally counterthreaded hollow seat of the first hydraulic component, joined to an axial appendage that presents a substantially conical and divergent outer surface, and that can be inserted into the internally threaded hollow seat of the first component. The annular gasket is mounted peripherally with respect to the axial appendage.

Thanks to the above configuration, the structure according to the invention enables an excellent fluid tightness to be obtained, in effect minimizing the flow leakages and the increase in costs proper to the devices of the state of the art.

Upon screwing of the externally threaded end portion of the tubular body into the internally threaded hollow seat of the first hydraulic .component, in fact, the axial appendage with conical outer surface, together with the gasket, will follow the rotational and axially translational movement of the end portion itself.

Thanks to the presence of axial-contrast means of the gasket, when the end portion of the axial appendage is screwed altogether into the cavity, the aforesaid axial-contrast means will bear upon the outer plane rim of the cavity itself. Consequently, as the axial appendage starts penetrating within the latter, the gasket will tend to rise along the conical outer surface on which it is set, expanding radially against the threaded internal wall of the cavity itself so as to provide a firm fluid tightness.

Advantageously, the axial appendage may have a maximum outer diameter smaller than the outer diameter of the externally threaded end portion, so as to define, with the internally counterthreaded seat of the first hydraulic component, a gap of variable thickness in which the gasket is compressed so as to guarantee tightness.

Thanks to this latter configuration, the operation of engagement and disengagement of the axial appendage within the hollow seat will be extremely facilitated.

Suitably, the outer surface of the axial appendage may comprise a portion that is substantially smooth or with high-quality surface finishing so as to favor relative sliding of the gasket upon screwing of the tubular body into the first hydraulic element.

The outer surface of the axial appendage may present, moreover, an annular portion with surface irregularities in order to reduce the relative rotation of said gasket, with respect to said tubular body and follow the rototranslational movement thereof during screwing.

Advantageously, the structure according to the invention may comprise a connection element, which can be removably coupled to the tubular body so as to simplify coupling between the first and second hydraulic components.

Suitably, the connection element may comprise a radial flange having a step for axial compression and containment of the gasket against the first hydraulic component.

In a preferred but non-exclusive configuration, the tubular body may be made at least partially of a material comprising a metal alloy, preferably in turn comprising aluminium, so as to prevent the problems linked to onset of phenomena of corrosion. However, all the components may be made of polymeric material, without departing from the claimed scope of protection.

In addition, the tubular body may be obtained at least partially by pressure die-casting so as to prove particularly inexpensive from the production standpoint. As is evident, however, any other production technique may be used, such as hot press forging, without departing from the claimed scope of protection.

### Brief description of the drawings

Further characteristics and advantages of the invention will emerge more clearly evident in the light of the detailed description of a preferred but non-exclusive embodiment of a connection structure according to the invention, illustrated by way of non-limiting example with the aid of the attached plates of drawing, in which:
**Figures 1** and **2** are cross-sectional views of connection structures according to the known art;
**Figures 3, 4** and **5** are partially sectioned views of some steps of installation in the operative position of a preferred but non-exclusive embodiment of a connection structure according to the invention;
**Figure 6** is an axonometric exploded view of a connection structure according to the invention;
**Figure 7** is an axonometric view of a detail of the connection structure according to the invention;
**Figures 8a** and **8b** are partially sectioned views of a first embodiment of a connection structure according to the invention in a disassembled configuration and in an assembled configuration, respectively;
**Figures 9a** and **9b** are partially sectioned views of a second embodiment of a connection structure according to the invention in a disassembled configuration and in an assembled configuration, respectively;
**Figures 10a** and **10b** are partially sectioned views of a third embodiment of a connection structure according to the invention, in a disassembled configuration and in an assembled configuration, respectively;
**Figures 11a** and **11b** are partially sectioned views of a fourth embodiment of a connection structure according to the invention in a disassembled configuration and in an assembled configuration, respectively.

### Detailed description of some preferred embodiments

With reference to the above figures, the structure according to the invention, designated as a whole by **1,** may be used for connecting together a first hydraulic component and a second hydraulic component.

By way of example, the first component may be constituted by the end of a hydraulic duct, for example of a radiator or the like, whilst the second component may be constituted by a fitting **N** for a valve, a plug **C,** or else another duct.

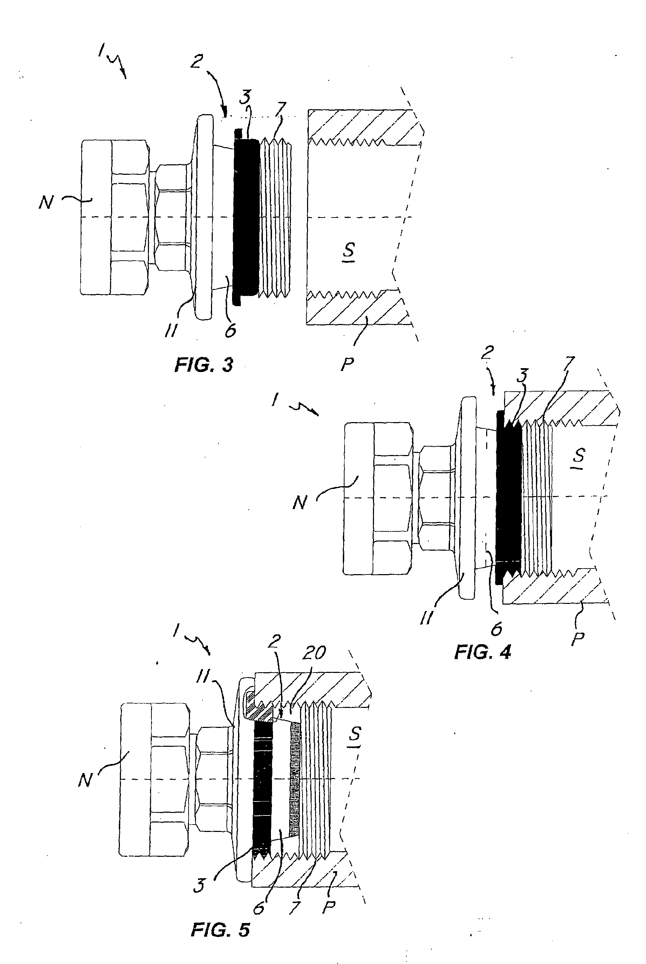

As may be seen in Figures 3, 4 and 5, the first component comprises an internally threaded hollow seat **S.**

The structure **1** comprises a tubular body **2,** which can be coupled to both of the hydraulic components, which, in the example of Figures 3, 4 and 5, are the duct **P** and the ring nut **N.** The structure may moreover comprise an annular gasket **3** made of elastomeric material, preferably, but not exclusively, NBR 70.

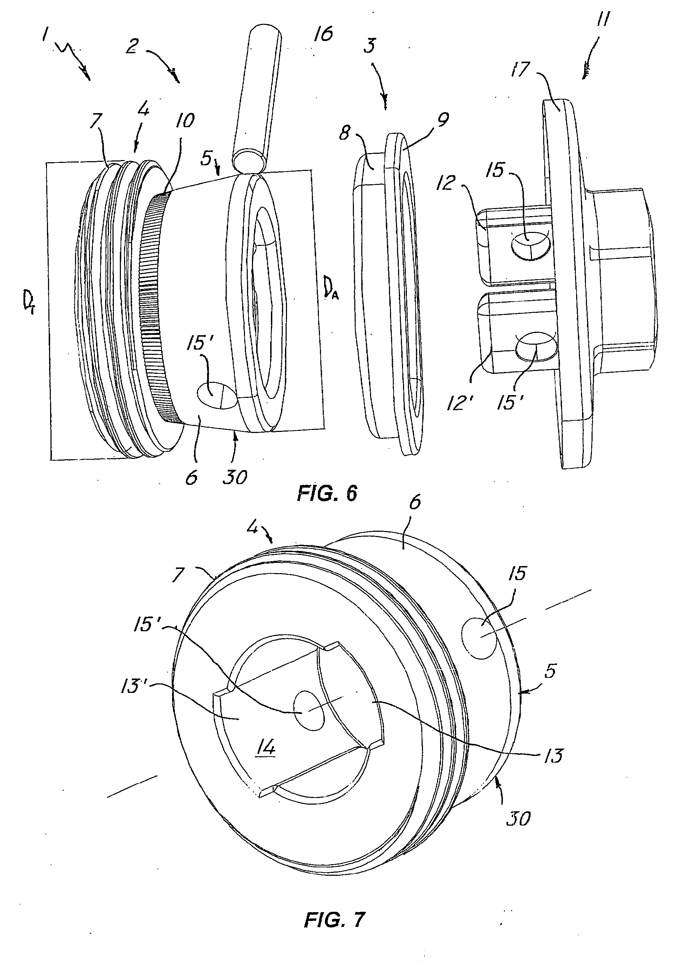

As may be seen from Figures 6 and 7, the tubular body **2** may present an externally threaded end portion **4,** of diameter **D_{T},** joined to an axial appendage **5,** of maximum diameter **D_{A},** which has a substantially conical and divergent outer surface **6.** By means of the external thread **7,** the externally threaded end portion **4** may be screwed within the seat **S,** drawing along with it also the axial appendage **5.** In order to favor the penetration of the body **2** inside the seat **S,** the diameter **D_{T}** may be greater than the diameter **D_{A}** of the axial appendage, so that the gasket **3** can be compressed in the gap of variable thickness **20.**

The gasket **3** is mounted peripherally with respect to the surface **6** and is formed by a substantially cylindrical part **8** joined to an annular flange **9,** defining axial contrast means that bear upon the first hydraulic component, causing it to rise along said conical surface **6** during screwing of the tubular body **2** into the seat **S.**

For the above purpose, the gasket **3** is configured in such a way that, when the connection **1** is not operatively mounted within the seat **S,** said gasket **3** will remain at the base of the axial appendage **5,** in a position corresponding to which surface irregularities **10** are made in order to reduce the relative rotation of the gasket **3** itself with respect to the tubular body **2** and follow its screwing movement. In the example illustrated, the surface irregularities **10** are represented by a knurling, even though other types of irregularities may be used provided that they achieve the same technical effect.

In order to favor sliding of the gasket **3** on the conical surface **6,** said gasket 3 comprises a portion with high-quality surface finishing **30.**

As it is clearly visible in Figure **6,** the connection structure comprises a connection element **11,** which can be removably fitted to the tubular body **2** by means of a pair of lugs **12, 12',** which can be slidably inserted into said body. In order to facilitate this operation, the body **2** comprises a pair of shaped seats **13, 13'** set in a position corresponding to the inner surface **14** of the axial appendage **5** so as to guide insertion of the lugs **12, 12'** and favor their positioning.

In order to prevent disengagement of the lugs **12, 12'** from the seats **13, 13',** arrest means are provided for the lugs themselves, constituted preferably, but not exclusively, by a pair of holes **15, 15'** passing through the appendage **5** and the lugs **12, 12',** in which a pin 16 can be inserted.

Advantageously, the connection element **11** comprises a radial flange **17** with an internal step **18** for compressing the gasket **3** axially against the first hydraulic component **P.**

In order to prevent problems linked to onset of phenomena connected to oxidation, the connection element **11** and the pin **16** are made of a material comprising a metal alloy resistant to oxidation, preferably, but not exclusively, forged brass. Preferably, also the body **2** will be made by pressure die-casting of aluminium alloy.

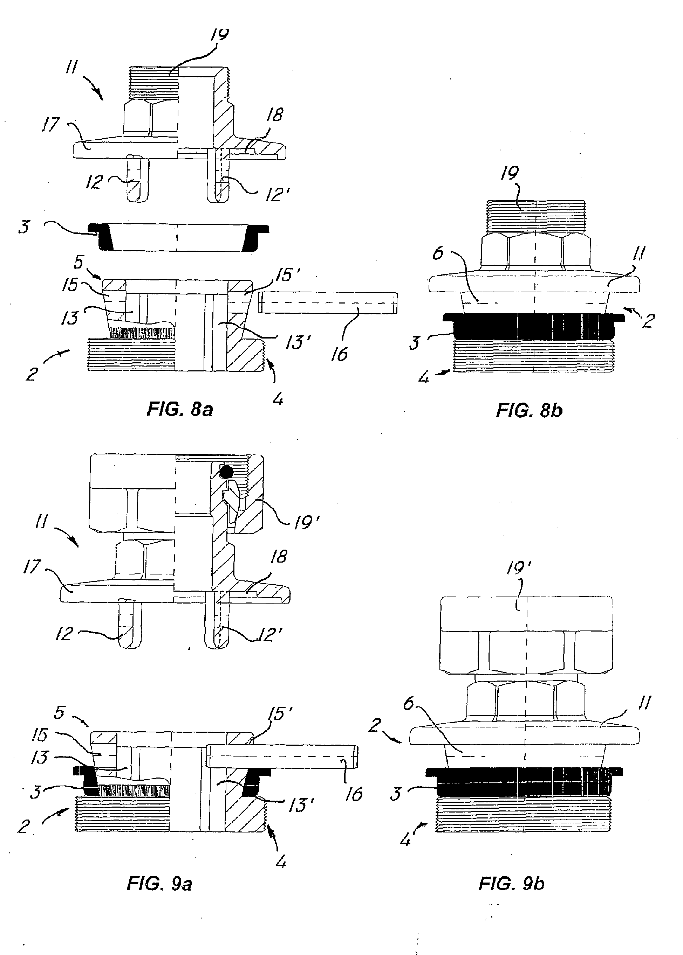

Figures 8a, 8b, 9a, 9b, 10a, 10b, 11a, and 11b illustrate some preferred but non-exclusive embodiments of the connection structure according to the invention. In said figures, "a" indicates the exploded configuration of the structure, whilst "b" indicates the assembled configuration.

In particular, Figures 8a and 8b illustrate an embodiment in which the connection element **11** comprises means for fitting to the second hydraulic component, in the case in point, an externally threaded portion **19** that may be useful for screwing to a valve for controlling the flow of a fluid.

Figures 9a and 9b illustrate another preferred but non-exclusive embodiment of the connection structure according to the invention, in which the means for fitting to the second hydraulic component are represented by the connection ring nut **19'.**

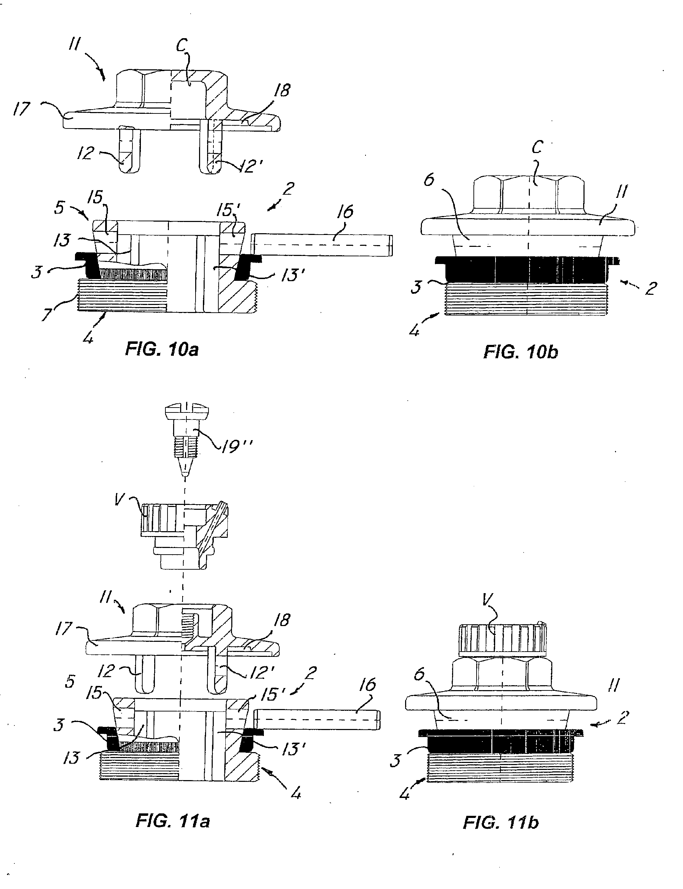

Figures 10a and 10b illustrate a further preferred but non-exclusive embodiment of the invention, in which the second hydraulic component, in the case in point a plug **C,** is made of a single piece with the connection element **11.**

Finally, Figures 11a and 11b illustrate a fourth preferred but non-exclusive embodiment of the connection structure according to the invention, in which the second hydraulic component is a valve **V** for regulation of the flow by means of the screw **19",** which also represents the means for fitting the valve **V** itself to the element **11.**

From the above description, it is clear that the connection structure according to the invention achieves the pre-set objects, and in particular that of guaranteeing excellent hydraulic and mechanical tightness.

Thanks to the particular configuration of the conical and divergent surface **6,** in fact, it is possible to compress effectively the gasket **3** between the axial appendage **5** and the internal wall of the seat **S** of the first hydraulic component **P.**

Several modifications and variations may be made to the structure according to the invention, all of which fall within the inventive idea expressed in the annexed claims. All the items may be replaced by other technically equivalent elements, and the materials may differ according to the requirements, without thereby departing from the scope of the invention.

Even though the structure has been described with particular reference to the attached figures, the reference numbers used in the description and in the claims have merely the purpose of facilitating understanding of the invention, and do not constitute any limitation.to the scope of protection.

## Claims

1. A fluid-tight connection structure for connection of a first hydraulic component **(P)** and a second hydraulic component **(V, C),** at least the first of which has a hollow seat **(S)** which is internally threaded, comprising at least one tubular body **(2)** which can be coupled to both of the hydraulic components with interposition of at least one annular gasket **(3)** made of elastomeric material;
**characterized in that** said tubular body **(2)** has an externally threaded end portion **(4),** which can be screwed into the internally threaded hollow seat **(S)** of the first hydraulic component, and is joined to an axial appendage **(5)** with substantially conical and divergent outer surface **(6)** that can be inserted into the internally threaded hollow seat **(S)** of the first component, said annular gasket **(3)** being mounted peripherally with respect to said axial appendage **(5)** so as to undergo a radial expansion against the internal wall of said hollow seat **(S)** upon screwing into the latter of the externally threaded end portion **(4)** of said tubular body **(2).**

2. The structure according to Claim 1, **characterized in that** said axial appendage (**5**) has a maximum outer diameter (**D_{A}**) smaller than the outer diameter (**D**_{T}) of said externally threaded end portion (**4**), so as to define with the internally threaded seat **(S)** of the first hydraulic component a gap of variable thickness **(20).**

3. The structure according to Claim 2, **characterized in that** the outer surface **(6)** of said axial appendage **(5)** comprises a portion that is substantially smooth or with high-quality surface finishing **(30),** so as to favor relative sliding of said gasket **(3)** upon screwing of said tubular body **(2)** into the first hydraulic element.

4. The structure according to Claim 1, **characterized in that** the outer surface **(6)** of said axial appendage **(5)** has an annular portion with surface irregularities **(10)** in order to reduce the relative rotation of said gasket **(3)** with respect to said tubular body **(2),** and follow the rototranslational movement thereof during screwing.

5. The structure according to Claim 4, **characterized in that** said surface irregularities are constituted by a knurling.

6. The structure according to Claim 1, **characterized in that** said annular gasket **(3)** comprises a substantially cylindrical part **(8)** joined to an annular flange **(9)** defining axial-contrast means.

7. The structure according to Claim 1, **characterized in that** it comprises a connection element **(11),** which can be removably fitted to said tubular body **(2).**

8. The structure according to Claim 7, **characterized in that** said connection element **(11)** comprises a pair of lugs **(12, 12'),** which can be slidably inserted into said tubular body **(2).**

9. The structure according to Claim 8, **characterized in that** said tubular body **(2)** comprises a pair of shaped seats **(13, 13')** for said lugs **(12, 12').**

10. The structure according to Claim 9, **characterized in that** said seats **(13, 13')** are set in a position corresponding to the inner surface **(14)** of said axial appendage **(5).**

11. The structure according to Claim 10, **characterized in that** said tubular body **(2)** comprises arrest means for said lugs **(12, 12').**

12. The structure according to Claim 11, **characterized in that** said arrest means comprise a pair of holes **(15, 15')** passing through said axial appendage (5) and in said lugs **(12, 12'),** in which a pin **(16)** can be inserted.

13. The structure according to Claim 7, **characterized in that** said connection element **(11)** comprises a radial flange **(17)** having a step **(18)** for axial compression and containment of said gasket **(3)** against the first hydraulic component.

14. The structure according to Claim 7, **characterized in that** said connection element **(11)** is made of a single piece with the second hydraulic component.

15. The structure according to Claim 7, **characterized in that** said connection element **(11)** comprises fitting means **(19, 19', 19")** for connection to the second hydraulic component.

16. The structure according to Claim 1, **characterized in that** said tubular body **(2)** is made at least partially of a material comprising a metal alloy.

17. The structure according to Claim 16, **characterized in that** said metal alloy comprises aluminium.

18. The structure according to Claim 1, **characterized in that** said tubular body **(2)** is obtained at least partially by pressure die-casting.
